(19) Europäisches Patentamt

European Patent Office

Office européen des brevets

(11) Veröffentlichungsnummer: **0 281 674 B1**

(12) **EUROPÄISCHE PATENTSCHRIFT**

(45) Veröffentlichungstag der Patentschrift: **29.04.92**

(21) Anmeldenummer: **87116749.0**

(22) Anmeldetag: **13.11.87**

(51) Int. Cl.⁵: **B60R 11/02**

(54) **Verfahren zur Diebstahlsicherung von Rundfunkempfängern.**

(30) Priorität: **27.02.87 DE 3706314**

(43) Veröffentlichungstag der Anmeldung:
**14.09.88 Patentblatt 88/37**

(45) Bekanntmachung des Hinweises auf die
Patenterteilung:
**29.04.92 Patentblatt 92/18**

(84) Benannte Vertragsstaaten:
**DE ES FR GB IT**

(56) Entgegenhaltungen:
**EP-A- 0 108 270**
**DE-A- 2 926 304**
**DE-A- 3 043 593**
**DE-A- 3 520 395**

(73) Patentinhaber: **VALEO NEIMAN**
**12bis, rue Maurice Berteaux**
**F-78290 CROISSY-SUR-SEINE(FR)**

(72) Erfinder: **Wolffgang, Günter**
**Flexstrasse 12**
**W-5600 Wuppertal 22(DE)**

(74) Vertreter: **Cohausz & Florack Patentanwälte**
**Postfach 14 01 61 Schumannstrasse 97**
**W-4000 Düsseldorf 1(DE)**

## Beschreibung

Die Erfindung betrifft ein Verfahren zur Diebstahlsicherung von Rundfunkempfängern, die in ein Kraftfahrzeug eingebaut sind, mit einem Geber, der ein codiertes Freigabesignal an einen fest mit dem Rundfunkempfänger verbundenen Empfänger zum Entriegeln einer Sperrvorrichtung absendet, die eine unerlaubte Inbetriebnahme des Rundfunkempfängers verhindert.

Um Rundfunkempfänger in Kraftfahrzeugen vor Diebstahl zu sichern, ist es bekannt, diese leicht herausnehmbar zu gestalten, so daß der Fahrer zumindest abends das Gerät aus dem Kraftfahrzeug mitnehmen kann. Ferner ist es bekannt, das Gerät an der Vorderseite mit einer Tastatur zu versehen, über die der Fahrer einen Zahlencode vor Gebrauch des Empfängers eingibt. Hierdurch wird ein Benutzen des Empfängers in seiner Handhabung arbeitsaufwendig.

Aufgabe der Erfindung ist es, einen Rundfunkempfänger insbesondere für Kraftfahrzeuge zu schaffen, der bei leichter Handhabung vor Diebstahl geschützt ist.

Diese Aufgabe wird erfindungsgemäß dadurch gelöst, daß der Geber, getrennt von dem Empfänger frei beweglich ist und das Freigabesignal mittels infrarotem Licht an den Empfänger aussendet und daß der Geber der gleich ist, wie er für die Diebstahlsicherung und/oder Türöffnung bei einem Kraftfahrzeug Verwendung findet.

Ein solcher Rundfunkempfänger wird durch den tragbaren Sender betätigt, wobei aufgrund der codierten Signale der Empfänger nur durch einen bestimmten tragbaren Sender zum Einschalten freigebbar ist. Wird nun dieser Sender vom Fahrer beim Verlassen des Kraftfahrzeugs mitgenommen, so ist der Empfänger für einen Dieb wertlos, da nur zusammen mit dem bestimmten Sender der Rundfunkempfänger zum Einschalten freigegeben werden kann. Während ein Mitnehmen des gesamten Rundfunkempfänger arbeitsaufwendig ist, ist das Einstecken eines solchen verhältnismäßig kleinen Senders, z.B. in der Tasche eines Kleidungsstückes, leicht möglich und stößt nicht auf Widerstände des Benutzers.

Dabei ist eine einfache Bauweise und eine sichere Übertragung der codierten Signale des Senders an den Empfänger durch die Verwendung von infrarotem Licht zur Übermittlung der Signale gewährleistet. Zudem ergibt sich durch die kombinierte Verwendung des Gebers als Geber z.B. für die Diebstahlsicherung und für die Entwicklung des Rundfunkempfängers eine besonders praxisgerechte Lösung, da nun nur ein Bedienungselement für die Entsicherung der Diebstahlsicherung und die Freigabe des Rundfunkempfängers von dem Kraftfahrzeugführer mit sich genommen werden muß.

So können die Signale vom selben Teil, insbesondere Schlüssel, aus gesendet werden, durch den auch die Kraftfahrzeugschlösser über gesendete Signale betätigbar sind. Hierdurch ist es nichteinmal erforderlich, daß ein zusätzliches Sendeteil für den Rundfunkempfänger geschaffen wird, sondern es kann für den Rundfunkempfänger gleichzeitig der Sender benutzt werden, durch den auch die Kraftfahrzeugschlösser betätigbar sind.

Die Bauweise des Gebers kann noch dadurch vereinfacht werden, daß die gesendeten Signale digital sind. Durch die Verwendung solcher digitalen Signale wird zudem die Sicherheit der Signalübertragung verbessert.

Da der Geber für die Diebstahlsicherung und/oder Türöffnung des Kraftfahrzeugs der gleiche ist, wie der Geber für die Freigabe des Einschaltvorgangs des Rundfunkempfängers, läßt sich die Codierung der Signale des Gebers besonders leicht dadurch ausführen, daß das zur Codierung des Gebers verwendete Codierungsverfahren das gleiche ist, wie das zur Codierung des für die Diebstahlsicherung und/oder Türöffnung verwendete Codierungsverfahren.

Ausführungsbeispiele der Erfindung werden im folgenden näher beschrieben.

Ein Kraftfahrzeug-Rundfunkempfänger in Kubusform weist an seiner Vorderseite eine dort befestigte Infrarot-Empfangsdiode auf, die binäre, codierte Impulsfolgen eines Infrarotsenders aufnehmen kann und an einen Kleinrechner weitergibt, der in Rundfunkempfänger eingebaut ist und die empfangenen Impulsfolgen decodiert und danach den Rundfunkempfänger zum Einschalten freigibt. Im Rundfunkempfänger ist somit ein Empfangsteil integriert. Dieses Empfangsteil ist mit einer Diode verbundene, die das infrarote Signal aufnimmt. Das Empfangsteil decodiert das Signal und sofern der richtige Code gesendet wurde, gibt es den Rundfunkempfänger zur Benutzung frei. Wird jetzt der Einschaltknopf betätigt, so arbeitet das Gerät. Nach dem Ausschalten des Gerätes ist der Einschaltvorgang wieder gesperrt.

Die Infrarotsignale werden von einem kleinen tragbaren Sender abgegeben, der eine Batterie oder einen Akku aufweist und aufgrund eines Programms eine bestimmte individuelle Impulsfolge nach Druck eines Schalters sendet. Der Sender kann gleichzeitig von einem tragbaren Fernbedienungssender gebildet sein, der zur Betätigung der Kraftfahrzeugschlösser vorhanden ist. Insbesondere kann der Sender im Kopf eines Schlüssels eingebaut sein.

Alternativ oder zusätzlich kann der Infrarotsender an einer seiner Seiten zwei Kontakte aufweisen, mit denen der Sender an eine Fläche des Rundfunkempfängers angelegt wird, um hierüber die binäre, codierte Impulsfolge an den Rundfunkempfänger abzugeben. Dies hat den Vorteil, daß bei leerer Batterie bzw. leerem Akku der Rundfunkempfänger immer noch betätigbar ist.

In einer weiteren Alternative kann die Infrarot-Empfangsdiode in einer Entfernung von Rundfunkempfänger befestigt und über ein Anschlußkabel verbunden sein.

## Patentansprüche

1. Verfahren zur Diebstahlsicherung von Rundfunkempfängern, die in ein Kraftfahrzeug eingebaut sind, mit einem Geber, der ein codiertes Freigabesignal an einen fest mit dem Rundfunkempfänger verbundenen Empfänger zum Entriegeln einer Sperrvorrichtung absendet, die eine unerlaubte Inbetriebnahme des Rundfunkempfängers verhindert, **dadurch gekennzeichnet,** daß der Geber, getrennt von dem Empfänger frei beweglich ist und das Freigabesignal mittels infrarotem Licht an den Empfänger aussendet und daß der Geber der gleiche ist, wie er für die Diebstahlsicherung und/oder Türöffnung bei einem Kraftfahrzeug Verwendung findet.

2. Verfahren nach Anspruch 1, **dadurch gekennzeichnet,** daß das zur Codierung des Gebers verwendete Codierungsverfahren das gleiche ist, wie das zur Codierung des für die Diebstahlsicherung und/oder Türöffnung verwendete Codierungsverfahren.

3. Verfahren nach Anspruch 1 oder 2**, dadurch gekennzeichnet,** daß die gesendeten Signale digital sind.

## Claims

1. A method for preventing the theft of radio receivers built into motor vehicles which employs an emitting device which transmits a coded release signal to a receiving device securely fixed to the radio receiver in order to unblock a blocking device which prevents unauthorised utilisation of the radio receiver, characterized in that the sitting device, separate from the receiver, is freely movable and transmits the release signal to the receiver by means of infrared light and in that the emitting device is the same as that used for preventing the theft and/or door opening of a motor vehicle.

2. A method as claimed in claim 1, characterized in that the coding method used for coding the sitting device is the same as the coding method used for coding in order to prevent theft and/or door opening.

3. A method as claimed in claim 1 or 2, characterized in that the emitted signals are digital signals.

## Revendications

1. Procédé pour protéger contre le vol les postes radio qui sont incorporés dans les véhicules, avec un émetteur, qui envoie un signal de libération codé à un récepteur fixé solidement sur le poste radio, pour débloquer un dispositif de blocage, qui empêche une mise en service du poste radio par une personne non autorisée, caractrisé par le fait que l'émetteur, séparé du récepteur, est amovible, et envoie le signal de libération au récepteur à l'aide d'une lumière infrarouge, et que l'émetteur est le même que celui qui trouve une application pour la protection contre le vol et/ou l'ouverture des portes sur un véhiculle.

2. Procédé selon la revendication 1, caractérisé par le fait que le système de codage utilisé pour le codage de l'émetteur est le même que le système de codage utilisé pour le codage pour la protection contre le vol et/ou l'ouverture des portes.

3. Procédé selon l'une des revendications 1 ou 2, caractérisé par le fait que les signaux envoyés sont numériques.